# EUROPEAN PATENT SPECIFICATION

(11) **EP 3 708 424 B1**
(45) Date of publication and mention of the grant of the patent: **11.10.2023**
(21) Application number: 18876235.5
(22) Date of filing: 05.11.2018
(51) Int. Cl.: B60N 2/64, B60R 21/207, B60N 2/60, B60N 2/58

(54) **AUTOMOBILE SEAT**
FAHRZEUGSITZ
SIÈGE D'AUTOMOBILE

(30) Priority: 08.11.2017 CN 201711091220
(43) Date of publication of application: 16.09.2020
(73) Proprietor: NIO (Anhui) Holding Co., Ltd., Hefei City, Anhui Province (CN)
(72) Inventor: GOTO, Ryuichiro, Shanghai (CN); WHEELER, Chris, Shanghai (CN); SHI, Jun, Shanghai (CN)
(74) Representative: Vossius & Partner Patentanwälte Rechtsanwälte mbB
(86) International application number: PCT/CN2018/113965
(87) International publication number: WO 2019/091352

(56) References cited:
- WO-A1-99/61222
- CN-A- 101 445 089
- CN-A- 101 857 004
- CN-A- 103 402 824
- CN-U- 203 651 540
- CN-U- 205 149 595
- CN-U- 207 955 415
- US-A- 5 826 938
- US-A1- 2015 367 805
- US-B2- 7 540 529

## Description

### Technical Field

The invention relates to the field of automobile interior decoration, and in particular to an automobile seat.

### Background Art

The back of an automobile seat in the prior art comprises a frame, a padding such as sponge, and a flexible front wrapping layer such as leather or cloth, and a rigid back plate, which may generally be made of plastic. In the case of a lateral airbag included in the automobile seat, two sides of the back are wrapped generally by a back plate only to a small extent because the rigid back plate may interfere with the blasting of an airbag or may be directed to a passenger, and the impact force on the rigid back plate upon the blasting of the airbag may also cause breakage of the rigid back plate. Scattered fragments of the rigid back plate may injure passengers or damage the safety airbag to cause the failure of the safety airbag, and accordingly hidden dangers exist.

US Patent No. US 7,540,529B2 discloses a vehicle seat assembly having a back panel which is configured to flex to create a gap through which air bag is deployed. The back panel of the seat is provided with a hinge between a back portion and a side portion of the panel. The hinge is configured to tear or sever when the air bag is deployed. US 7,540,529B2 has not disclosed a weaken portion on the side portion of the back panel.

US Pub. No. US 2015/0367805 A1 discloses vehicle seat including support structure, an airbag module and a cover assembly. The cover assembly comprises a support with a hinge. US 2015/0367805 A1 has not disclosed a weaken portion on the side portion of the back panel.

US Patent Number 5,826,938 discloses a vehicle seat equipped with side air bag assembly. A rear attachment board is mounted on a support frame of the back rest and has a back portion and a side portion. The side portion is formed as a door portion which has two lateral slits. The slits are parallel with each other and not conform with the blast of the airbag.

### Summary of the Invention

It is an object of the invention to solve or at least alleviate the problems in the prior art.

It is also an object of the invention to improve the safety of an automobile seat during blasting of an airbag.

It is also an object of the invention to provide more design possibilities for a back plate of an automobile seat.

The objects of the invention are achieved by the features of independent claim 1. Further preferred embodiments of the present invention are defined by the features of the dependent claims.

Optionally, in the automobile seat described above, at least one of the weakened lines extends in a direction parallel to a blasting direction of the airbag.

Optionally, in the automobile seat described above, at least one of the weakened lines extends in a thickness direction of the seat back.

Optionally, in the automobile seat described above, at least one of the weakened lines extends from a front edge of the lateral extension of the back plate by at least 2/3 of the width of the lateral extension at the location of the at least one weakened line.

In the automobile seat according to the present invention, the at least one weakened line comprises a first weakened line and a second weakened line spaced apart from each other.

Optionally, in the automobile seat described above, the first weakened line is proximate to a lower boundary of an airbag blasting action area or located below the airbag blasting action area, and/or the second weakened line is proximate to an upper boundary of the airbag blasting action area or located above the airbag blasting action area.

In the automobile seat according to the present invention, , the first weakened line and the second weakened line converge at an angle in a front-to-back direction.

Optionally, in the automobile seat described above, the first weakened line is substantially horizontal, and the second weakened line extends obliquely downwardly in the front-to-back direction.

Optionally, in the automobile seat described above, the lateral extension of the back plate of the seat extends from a rear side of the seat back by at least 2/3 of the thickness of the seat back.

Optionally, in the automobile seat described above, the back plate of the automobile seat is made of plastic.

The back plate of the automobile seat according to the invention will have a predetermined specified movement trajectory and will not injure passengers during blasting of the airbag, thereby providing improved safety.

### Brief Description of the Drawings

The disclosure of the invention will become more readily understood with reference to the accompanying drawings. Those skilled in the art will readily appreciate that these accompanying drawings are merely for illustrative purposes and are not intended to limit the scope of protection of the invention. In addition, like components are indicated by like numbers in the figures, in which:
Fig. 1 shows a perspective view of an automobile seat;
Figs 2A and 2B respectively show a side view and a cross-sectional view of an automobile seat in the prior art;
Figs. 3A and 3B respectively show a side view and a cross-sectional view of an automobile seat according to an embodiment of the invention; and
Fig. 4 shows an airbag blasting simulation diagram of the automobile seat according to the embodiment of the invention.

### Detailed Description of Embodiments

It can be readily understood that according to the technical solution of the invention, a person of ordinary skill in the art may propose multiple interchangeable structures and implementations as long as they do not depart from the invention. as defined by the claims. Therefore, the following specific implementations and the accompanying drawings are merely exemplary descriptions of the technical solution of the invention, and should not be construed as the entirety of the invention or construed as limiting the technical solution of the invention.

Directional terms, such as up, down, left, right, front, rear, front side, back side, top, and bottom, which are or may be mentioned in this description, are defined with respect to the structures shown in the accompanying drawings, and are relative concepts, and therefore may correspondingly vary depending on different positions and different conditions in use. Therefore, these or other orientation terms should not be construed as restrictive terms as well.

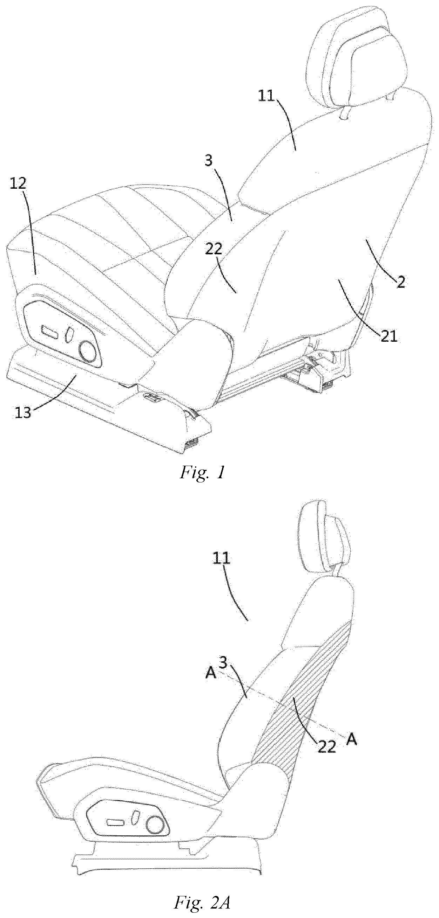

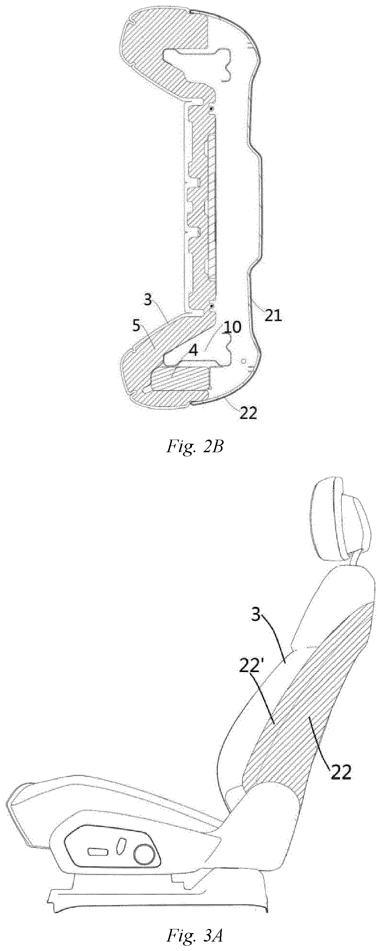

Figs. 1, 2A and 2B show views of an automobile seat from different angles of view. The automobile seat generally comprises a seat cushion 12, a back 11, and an adjustment portion 13. The adjusting portion 13 may, for example, adjust the front, rear, up and down positions of the automobile seat and the inclination of the back 11, the lumbar support, etc. The back of the automobile seat comprises a frame 10, a padding 5, an airbag 4 located on one side of the seat back, and a front wrapping layer 3 and a back plate 2 which jointly wrap the seat back. The padding 5 is generally made of a soft elastic material such as sponge, and the front wrapping layer 3 may be genuine leather, artificial leather or cloth, whereas the back plate 2 is made of a rigid material such as plastic. As shown in Fig. 2B, the back plate 2 comprises a back plate main body 21 on a back side of the seat back and a lateral extension 22 on a lateral side of the seat back. In order to prevent the rigid back plate 2 from hindering the release of the airbag or the rigid back plate 2 from being broken and scattered due to the blasting of the airbag, the design of the lateral extension 22 of the back plate generally needs to keep off an airbag blasting action area, which causes certain limitations to the design of the automobile seat and the design of the overall interior decoration of an automobile.

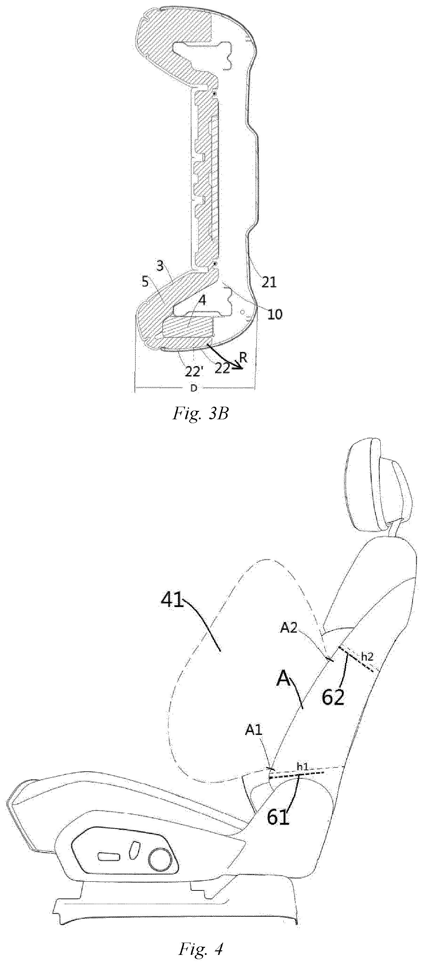

Reference is now made to Figs. 3A, 3B and 4, which show an automobile seat according to an embodiment of the invention. In this embodiment, the lateral extension 22 of the back plate of the back of the automobile seat extends further forward to form an expansion portion 22'. In some embodiments, the lateral extension of the back plate of a newly designed seat back extends not less than 1/2 of, or even more than 2/3 of the thickness D of the seat back even near the airbag blasting action area. In order to prevent the airbag 4 from being hindered by the lateral extension 22 of the back plate during blasting, at least one weakened line 61, 62 is included on the lateral extension 22. The weakened line 61, 62 is used for specifying the movement of the lateral extension 22 of the back plate during blasting of the airbag 41, for example, causing the lateral extension 22 of the back plate to move in a predetermined direction to prevent fragments of the lateral extension 22 from being scattered in an arbitrary direction. The weakened line is a line with a lower strength than other surrounding positions. For example, a weakened line may be formed by thinning in thickness, grooving, etc. According to the present invention, the first and second weakened lines are formed by perforation.

In some embodiments, one weakened line 61, 62 extends in a direction parallel to the blasting direction of the airbag. For example, the lateral airbag blasts generally in the front-to-back direction, and the weakened line may therefore also be arranged in the front-to-back direction. In the embodiment shown in Fig. 4, the weakened lines extends in a thickness direction of the seat back.

According to the invention, the seat comprises a first weakened line 61 and a second weakened line 62 spaced apart from each other. In the figure, the airbag in a blasting state 41, which acts on the airbag bursting action area A of the lateral extension 22 of the back plate, is shown in broken lines, and a lower boundary A1 and an upper boundary A2 of the airbag bursting action area A are shown schematically. In some embodiments, the first weakened line 61 is located below the airbag bursting action area A, and the second weakened line is located above the airbag bursting action area A. In some embodiments, the first weakened line 61 is proximate to the lower boundary A1 of the airbag proximate to bursting action area A, and the second weakened line 62 is proximate to the upper boundary A2 of the airbag bursting action area A.

In some embodiments, a weakened line extends continuously from a front edge of the lateral extension 22 of the back plate of the automobile seat by at least 1/2 of, or even up to at least 2/3 of the width of the lateral extension at the location of the at least one weakened line. As shown in Fig. 4, the first weakened line 61 extends substantially 3/4 of the width h1 of the lateral extension at the first weakened line, whereas the second weakened line 62 substantially completely extends over approximately the entire width h2 of the lateral extension at the second weakened line. In some embodiments, excluded by the invention, the first weakened line 61 and the second weakened line 62 may be arranged in parallel, and optionally both parallel to the blasting direction of the airbag. In some other embodiments, the first weakened line 61 and the second weakened line 62 may be at an angle such that the first weakened line 61 and the second weakened line 62 jointly form a shape similar to a Chinese character " 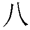 ". In the embodiment shown in Fig. 4, the first weakened line 61 and the second weakened line 62 converge at an angle in the front-to-back direction. In an alternative excluded by the invention the first weakened line 61 and the second weakened line 62 diverge at an angle in the front-to-back direction. In some embodiments, the first weakened line 61 may be substantially horizontal, and the second weakened line 62 may extend obliquely downwardly in the front-to-back direction. It will be appreciated that a weakened not forming part of the invention may be formed by any suitable means known in the art, for instance formed on the inner side of the lateral extension of the back plate, for example, the back plate is weakened by removing part of the material from the inner side the lateral extension of the back plate, so that the appearance of the back plate is not affected.

As shown in Fig. 3B, during blasting of the airbag 4, the lateral extension 22 of the back plate of the automobile seat according to some embodiments of the invention will have a predetermined movement direction specified by at least one weakened line. The movement direction may, for example, be arranged to flip as indicated by an arrow R, and fragments of the lateral extension of the back plate are prevented from being scattered to injure passengers when the lateral extension of the back plate moves in this direction.

Since the lateral extension 22 of the back plate of the invention is provided with the weakened line, greater design degrees of freedom of the lateral extension of the seat back plate is provided, for example, the lateral extension 22 of the seat back plate may extend from the rear side of the seat back by at least 2/3 of the thickness D of the seat back.

The particular embodiments described above are intended merely to more clearly describe the principles of the invention, in which each component is clearly shown or described in order to facilitate a better understanding of the principles of the invention. Various modifications or variations of the invention could be readily made by those skilled in the art as long as they do not depart from the scope of the invention. as defined by the claims It should therefore be understood that such modifications or variations are intended to be included within the scope of protection of the invention.

## Claims

1. An automobile seat, comprising a seat back, (11) the seat back comprising a frame, (10) a padding, (5) an airbag (4) located on one side of the seat back, and a front wrapping layer (3) and a back plate (2) which jointly wrap the seat back, the back plate being made of a rigid material, wherein the back plate comprises a back plate main body (21) on a back side of the seat back and a lateral extension (22) on a lateral side of the seat back, and the lateral extension of the back plate comprising a first weakened line (61) and a second weakened line (62) spaced apart from each other for specifying the movement of the lateral extension of the back plate during blasting of the airbag, wherein the first weakened line and the second weakened line converge at an angle in a front-to-back direction and the first weakened line and the second weakened line are formed by perforation.

2. The automobile seat according to claim 1, **characterized in that** at least one weakened line (61, 62) extends in a direction parallel to a blasting direction of the airbag.

3. The automobile seat according to claim 1, **characterized in that** at least one weakened line (61, 62) extends from a front edge of the lateral extension of the back plate by at least 2/3 of the width of the lateral extension at the location of this line.

4. The automobile seat according to claim 1, **characterized in that** the first weakened line (61) is proximate to a lower boundary of an airbag blasting action area or located below the airbag blasting action area, and/or the second weakened line (62) is proximate to an upper boundary of the airbag blasting action area or located above the airbag blasting action area.

5. The automobile seat according to claim 1, **characterized in that** the first weakened line (61) is substantially horizontal, and the second weakened line (62) extends obliquely downwardly in the front-to-back direction.

6. The automobile seat according to any one of claims 1 to 5, **characterized in that** the lateral extension (22) of the back plate (2) extends from a rear side of the seat back by at least 2/3 of the thickness of the seat back.

7. The automobile seat according to any one of claims 1 to 5, **characterized in that** the back plate (2) of the automobile seat is made of plastic.

## Patentansprüche

1. Kraftfahrzeugsitz, aufweisend eine Rückenlehne (11), wobei die Rückenlehne einen Rahmen (10), eine Polsterung (5), einen an einer Seite der Rückenlehne angeordneten Airbag (4) und eine vordere Überzugsschicht (3) und eine Rückenplatte (2) aufweist, die gemeinsam die Rückenlehne überziehen, wobei die Rückenplatte aus einem starren Material hergestellt ist, wobei die Rückenplatte einen Rückenplattenhauptkörper (21) an einer Rückseite der Rückenlehne und eine seitliche Verlängerung (22) an einer lateralen Seite der Rückenlehne aufweist und wobei die seitliche Verlängerung der Rückenplatte eine erste Schwächungslinie (61) und eine zweite Schwächungslinie (62) aufweist, die voneinander beabstandet sind, um die Bewegung der seitlichen Verlängerung der Rückenplatte während des Auslösens des Airbags zu spezifizieren, wobei die erste Schwächungslinie und die zweite Schwächungslinie in einem Winkel in einer von vorne nach hinten gehenden Richtung konvergieren und die erste Schwächungslinie und die zweite Schwächungslinie durch Perforation gebildet sind.

2. Kraftfahrzeugsitz nach Anspruch 1, **dadurch gekennzeichnet, dass** sich mindestens eine Schwächungslinie (61, 62) in einer parallel zu einer Auslöserichtung des Airbags verlaufenden Richtung erstreckt.

3. Kraftfahrzeugsitz nach Anspruch 1, **dadurch gekennzeichnet, dass** sich mindestens eine Schwächungslinie (61, 62) um mindestens 2/3 der Breite der seitlichen Verlängerung an dem Ort dieser Linie von einem vorderen Rand der seitlichen Verlängerung der Rückenplatte erstreckt.

4. Kraftfahrzeugsitz nach Anspruch 1, **dadurch gekennzeichnet, dass** die erste Schwächungslinie (61) in der Nähe einer unteren Grenze eines Airbag-Auslösewirkungsbereichs liegt oder unter dem Airbag-Auslösewirkungsbereich angeordnet ist und/oder die zweite Schwächungslinie (62) in der Nähe einer oberen Grenze eines Airbag-Auslösewirkungsbereichs liegt oder über dem Airbag-Auslösewirkungsbereich angeordnet ist.

5. Kraftfahrzeugsitz nach Anspruch 1, **dadurch gekennzeichnet, dass** die erste Schwächungslinie (61) im Wesentlichen horizontal ist und die zweite Schwächungslinie (62) sich in der von vorne nach hinten gehenden Richtung schräg nach unten erstreckt.

6. Kraftfahrzeugsitz nach einem der Ansprüche 1 bis 5, **dadurch gekennzeichnet, dass** sich die seitliche Verlängerung (22) der Rückenplatte (2) um mindestens 2/3 der Dicke der Rückenlehne von einer Rückseite der Rückenlehne erstreckt.

7. Kraftfahrzeugsitz nach einem der Ansprüche 1 bis 5, **dadurch gekennzeichnet, dass** die Rückenplatte (2) des Kraftfahrzeugsitzes aus Kunststoff hergestellt ist.

## Revendications

1. Siège d'automobile, comprenant un dossier de siège (11), le dossier de siège comprenant un cadre (10), un rembourrage (5), un coussin gonflable (4) situé sur un côté du dossier de siège, et une couche d'enveloppement avant (3) et une plaque arrière (2) qui enveloppent conjointement le dossier de siège, la plaque arrière étant faite d'un matériau rigide, la plaque arrière comprenant un corps principal de plaque arrière (21) sur un côté arrière du dossier de siège et une extension latérale (22) sur un côté latéral du dossier de siège, et l'extension latérale de la plaque arrière comprenant une première ligne affaiblie (61) et une seconde ligne affaiblie (62) espacées l'une de l'autre pour spécifier le mouvement de l'extension latérale de la plaque arrière pendant le déclenchement du coussin gonflable, la première ligne affaiblie et la seconde ligne affaiblie convergeant à un angle dans une direction avant-arrière et la première ligne affaiblie et la seconde ligne affaiblie étant formées par perforation.

2. Siège d'automobile selon la revendication 1, **caractérisé en ce qu'**au moins une ligne affaiblie (61, 62) s'étend dans une direction parallèle à une direction de déclenchement du coussin gonflable.

3. Siège d'automobile selon la revendication 1, **caractérisé en ce qu'**au moins une ligne affaiblie (61, 62) s'étend depuis un bord avant de l'extension latérale de la plaque arrière sur au moins 2/3 de la largeur de l'extension latérale à l'endroit de cette ligne.

4. Siège d'automobile selon la revendication 1, **caractérisé en ce que** la première ligne affaiblie (61) est proche d'une limite inférieure d'une zone d'action de déclenchement de coussin gonflable ou située en dessous de la zone d'action de déclenchement de coussin gonflable, et/ou la seconde ligne affaiblie (62) est proche d'une limite supérieure de la zone d'action de déclenchement de coussin gonflable ou située au-dessus de la zone d'action de déclenchement de coussin gonflable.

5. Siège d'automobile selon la revendication 1, **caractérisé en ce que** la première ligne affaiblie (61) est sensiblement horizontale, et la seconde ligne affaiblie (62) s'étend obliquement vers le bas dans la direction avant-arrière.

6. Siège d'automobile selon l'une quelconque des revendications 1 à 5, **caractérisé en ce que** l'extension latérale (22) de la plaque arrière (2) s'étend à partir d'une face arrière du dossier de siège sur au moins 2/3 de l'épaisseur du dossier de siège.

7. Siège automobile selon l'une quelconque des revendications 1 à 5, **caractérisé en ce que** la plaque de dossier (2) du siège automobile est en matière plastique.
